# FASCICULE DE BREVET EUROPEEN

(11) **EP 0 909 473 B1**
(45) Date de publication et mention de la délivrance du brevet: **29.09.2004**
(21) Numéro de dépôt: 98908153.4
(22) Date de dépôt: 09.02.1998
(51) Int. Cl.: H02G 5/04, F16B 31/02, F16B 23/00

(54) **DISPOSITIF D'ALIMENTATION ELECTRIQUE PAR GAINE ET PRISE MOBILE DE COURANT**
ELEKTRISCHE VERSORGUNGSEINRICHTUNG MIT SCHUTZHAUBE UND BEWEGBARER STROMSTECKDOSE
SLEEVE AND MOBILE CONNECTION FOR ELECTRIC SUPPLY

(30) Priorité: 10.02.1997 FR 9701640
(43) Date de publication de la demande: 21.04.1999
(73) Titulaire: Constructions Electriques FELS, S.A., 67400 Illkirch Graffenstaden (FR)
(72) Inventeur: SPAAK, Etienne, F-67000 Strasbourg (FR); ARNOLD, Claude, F-67100 Strasbourg (FR)
(74) Mandataire: Nuss, Laurent
(86) Numéro de dépôt international: PCT/FR1998/000247
(87) Numéro de publication internationale: WO 1998/035414

(56) Documents cités:
- CH-A- 681 649
- DE-U- 29 602 589
- FR-A- 1 602 840
- FR-A- 2 264 412
- FR-A- 2 420 864
- FR-A- 2 547 465
- FR-A- 2 567 819
- US-A- 3 189 679
- US-A- 3 345 471
- US-A- 3 561 317

## Description

La présente invention concerne le domaine de l'alimentation en courant électrique de mécanismes mobiles tels que des ponts roulants, des monorails, des palans, des petits outils de travail du type perceuse, machine à visser, ou analogue, et d'autres dispositifs déplaçables, et a pour objet un dispositif d'alimentation électrique par gaine et prise mobile de courant.

Des gaines, qui sont destinées à toutes applications nécessitant une prise mobile de courant en basse tension, pour des intensités dérivées inférieures à 260 ampères et pour des vitesses de translation inférieures à 600 mètres par minute, se présentent généralement sous forme de profilés en matière synthétique renfermant dans leurs parois intérieures plusieurs conducteurs électriques et présentant des longueurs standards.

Les gaines existant actuellement présentent le plus souvent des sections d'extrémité droites ou obliques. L'isolation électrique des jonctions est assurée au moyen de couvre-joints. La continuité électrique est obtenue, soit par le fait que les conducteurs sont tirés d'un seul tenant dans les gaines, soit, lorsque les conducteurs sont prémontés dans les gaines, au moyen de fiches de raccordement ou de systèmes vis-écrou.

Afin de permettre une bonne liaison de conduction électrique, il a été proposé, par FR-A-2 420 864, un montage à déplacement libre des conducteurs dans les tronçons de gaine et de pourvoir les extrémités desdits conducteurs de formes complémentaires pour réaliser des éclisses de raccordement.

Ces gaines d'alimentation connues présentent, cependant, l'inconvénient d'être d'un poids relativement élevé, alors que leur rigidité, tant transversale que longitudinale est faible. Il en résulte la nécessité de prévoir un plus grand nombre de support afin de garantir une bonne tenue, sans déformation, de ces gaines, ainsi que pour éviter les difficultés à empêcher la pénétration volontaire des doigts à l'intérieur du profilé en matière synthétique.

Par ailleurs, les couvre-joints existant au niveau des liaisons d'extrémité de gaines sont sous forme de demi-coquilles assemblées par boulonnage. Une telle réalisation de ces couvre-joints permet, certes, une isolation correcte des liaisons, mais, cependant, leur mise en place ou leur démontage nécessite une intervention relativement longue, ce qui entraîne une augmentation conséquente des coûts d'intervention.

En outre, les suspensions de ces gaines sont le plus souvent réalisées en plusieurs éléments et entraînent les mêmes inconvénients de montage et de démontage que les couvre-joints.

Enfin, les chariots collecteurs formant les prises mobiles sont équipés de balais de contact, dont la fixation sur lesdits chariots est assurée par l'intermédiaire de vis et de moyens de retenue coopérant avec ces dernières.

Par ailleurs, on connaît, par DE-U-296 02 589, un dispositif d'alimentation électrique par gaine et prise mobile de courant constitué par des tronçons de gaine en matériau isolant, dans lesquels sont disposés des conducteurs électriques connectés entre-eux au niveau des jonctions de gaine, par au moins une boîte d'alimentation en ligne ou en extrémité, par un capot de fermeture d'une extrémité de la ligne d'alimentation électrique formée par les tronçons de la gaine, par des suspensions pour des tronçons de gaine et par au moins un chariot collecteur permettant de dériver le courant électrique vers tout récepteur fixe ou mobile.

Chaque tronçon de gaine en matériau isolant est constitué sous forme d'une enveloppe isolante, à section en U renversée, de logement des conducteurs électriques et de guidage du ou des chariots collecteurs.

Ce document ne décrit, cependant, pas une enveloppe rigide et de bonne stabilité géométrique en particulier par rapport à des efforts transversaux, de sorte que l'enveloppe selon ce document ne permet pas d'empêcher un accès aux parties sous tension.

Il est également connu, par FR-A-2 567 819, une jonction entre l'âme et les ailes d'un profilé, par l'intermédiaire de sections curvilignes.

Toutefois, ces sections ne sont pas entretoisées et le profilé obtenu reste sujet à des déformations sous faibles contraintes. Les sections ne permettent pas d'obtenir une rigidité transversale qui soit suffisante pour garantir le profilé contre un écartement de ses ailes et empêcher un accès aux parties sous tension, notamment à une main humaine.

La présente invention a pour but de pallier ces inconvénients proposant un dispositif d'alimentation électrique par gaine et prise mobile de courant, dont la gaine présente une meilleure rigidité longitudinale et transversale, tout en étant allégée par rapport aux gaines existantes et dont le montage des autres éléments est grandement facilité.

A cet effet, ce dispositif d'alimentation électrique par gaine et prise mobile de courant, qui est essentiellement constitué par des tronçons de gaine en matériau isolant, dans lesquels sont disposés des conducteurs électriques connectés entre-eux au niveau des jonctions des tronçons de gaine, par des couvre-joints de raccordement des tronçons de gaine isolant les connexions électriques desdits conducteurs électriques, par au moins une boîte d'alimentation en ligne ou en extrémité, par des capots de fermeture des extrémités de la ligne d'alimentation électrique formée par les tronçons de gaine, par des suspensions pour les tronçons de gaine, et par au moins un chariot collecteur permettant de dériver le courant électrique vers tout récepteur fixe ou mobile, est caractérisé en ce que chaque tronçon de gaine en matériau isolant est constitué sous forme d'une enveloppe isolante, à section en U renversé, de logement des conducteurs électriques et de guidage du ou des chariots collecteurs, cette enveloppe présentant des parois de structure alvéolaire et étant munie, le cas échéant, dans sa partie inférieure d'un joint anti-poussière souple, la jonction entre l'âme et les ailes du U formant l'enveloppe étant réalisée par l'intermédiaire de pans inclinés améliorant la rigidité et la stabilité géométrique par rapport à des efforts transversaux ayant tendance à écarter les ailes du U, afin d'empêcher l'accès aux parties sous tension à une main humaine.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en perspective d'un dispositif conforme à l'invention ;
la figure 2 est une vue en coupe transversale du dispositif au niveau d'un chariot collecteur ;
la figure 3 est une vue en coupe transversale, à plus grande échelle, d'un tronçon de gaine ;
la figure 4 est une vue en élévation latérale d'un chariot collecteur ;
la figure 5 est une vue en élévation latérale et en coupe, à plus grande échelle, d'un balai de contact du chariot collecteur ;
la figure 6 est une vue en plan et en coupe du balai suivant la figure 5;
la figure 7 est une vue en élévation frontale d'un couvre-joint de raccordement des tronçons de gaine ;
la figure 8 est une vue en élévation frontale d'une boîte d'alimentation en ligne;
la figure 9 est une vue en élévation frontale d'une suspension pour tronçon de gaine, et
la figure 10 est une vue en élévation d'une vis de connexion des conducteurs électriques.

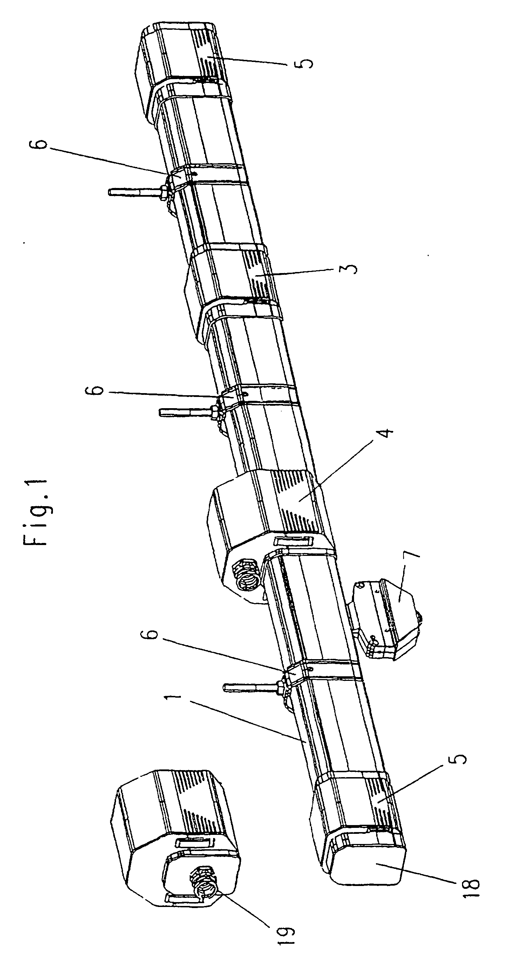

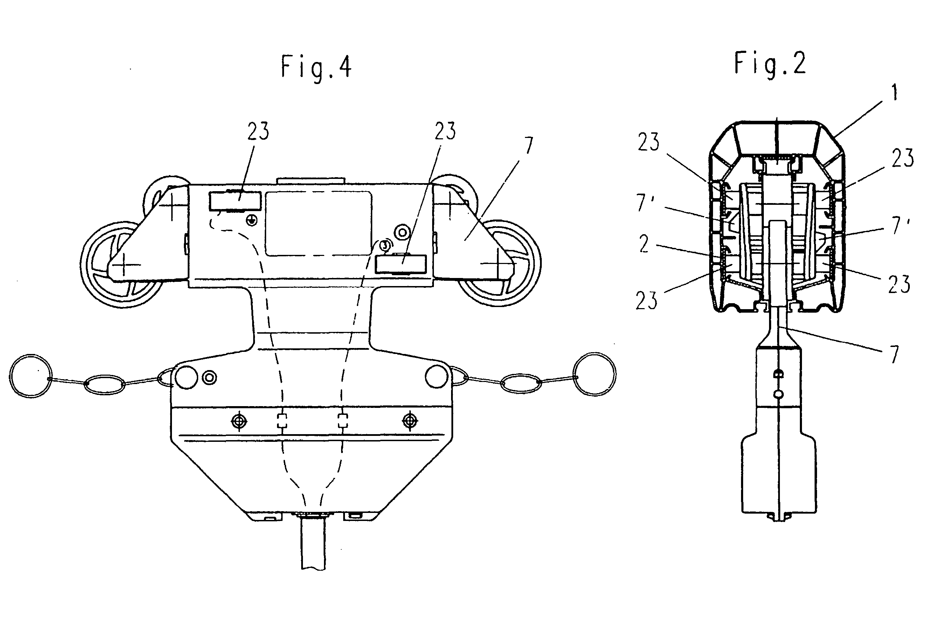

La figure 1 des dessins annexés représente un dispositif d'alimentation électrique par gaine et prise mobile de courant, qui est essentiellement constitué par des tronçons de gaine 1 en matériau isolant, dans lesquels sont disposés des conducteurs électriques 2 (figure 2) connectés entre-eux au niveau des jonctions des tronçons de gaine, par des couvre-joints 3 de raccordement des tronçons de gaine 1 isolant les connexions électriques desdits conducteurs électriques 2, par au moins une boîte 4 d'alimentation en ligne ou en extrémité, par des capots 5 de fermeture des extrémités de la ligne d'alimentation électrique formée par les tronçons de gaine 1, par des suspensions 6 pour les tronçons de gaine 1, et par au moins un chariot collecteur 7 permettant de dériver le courant électrique vers tout récepteur fixe ou mobile.

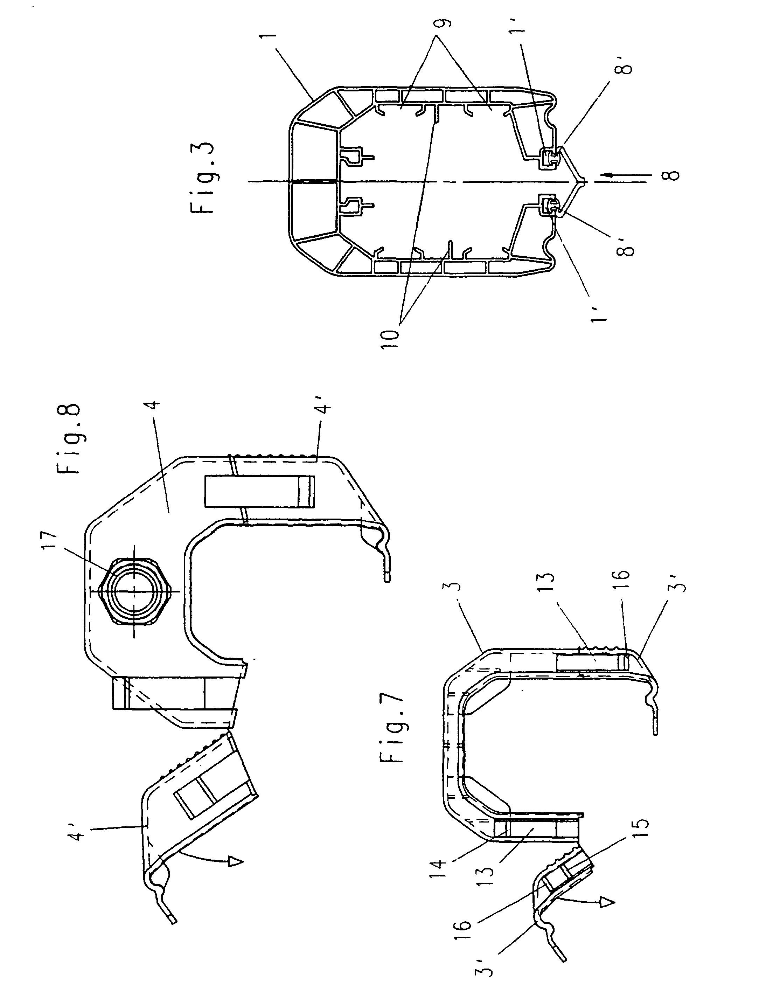

Conformément à l'invention, chaque tronçon de gaine 1 en matériau isolant est constitué sous forme d'une enveloppe isolante, à section en U renversé, de logement des conducteurs électriques 2 (figure 2) et de guidage du ou des chariots collecteurs 7, cette enveloppe présentant des parois de structure alvéolaire et étant munie dans sa partie inférieure de rainures 1' permettant la réception d'un joint anti-poussière souple 8 (figure 3).

Le joint anti-poussière souple 8 se compose de deux éléments symétriques pourvus chacun d'un profil 8' de fixation dans une rainure 1' de forme correspondante prévue à chaque extrémité des ailes du U formant les tronçons 1, ces éléments étant constitués en une matière synthétique souple (figure 3). Ainsi, les éléments constitutifs du joint 8 sont jointifs par leur bord libre en position normale de service et s'écartent en se plaquant contre les bords longitudinaux du ou des chariots 7, lors du passage de ces derniers, de sorte que toute pénétration de poussière ou autre pollution est évitée.

La structure alvéolaire des parois de l'enveloppe formant chaque tronçon de gaine 1 permet d'allier une réduction du poids de ladite enveloppe à une amélioration de la rigidité longitudinale et de la rigidité transversale. En outre, du fait de la réduction de poids, le coût de ces tronçons 1 est réduit en correspondance. La rigidité longitudinale permet de supporter le poids des conducteurs 2, le poids du chariot 7 et des autres accessoires, alors que la rigidité transversale élevée permet de satisfaire aux exigences de résistance à la déformation par écartement des ailes du tronçon de gaine en U. De plus, la jonction entre l'âme et les ailes du U formant l'enveloppe est réalisée par l'intermédiaire de pans inclinés, ce qui contribue également à une amélioration de la rigidité.

L'enveloppe formant chaque tronçon de gaine 1 est avantageusement munie, sur ses faces internes, d'une part sur les faces latérales correspondant aux ailes du U, de logements longitudinaux 9 destinés aux conducteurs électriques 2 et, entre lesdits logements 9, de nervures 10 de détrompage du ou des chariots collecteurs 7 et, d'autre part, sur la face interne de son âme et le long du côté intérieur des extrémités libres des ailes du U, de surfaces latérales de guidage du ou desdits chariots collecteurs 7. Comme le montre plus particulièrement la figure 2 des dessins annexés, les nervures 10 de détrompage du ou des chariots collecteurs 7 sont décalées entre-elles par rapport à un plan horizontal et coopèrent chacune avec une butée latérale correspondante 7' du ou desdits chariots 7 en formant un détrompeur. Ainsi, la mise en place d'un chariot collecteur 7 ne peut être effectuée que suivant un seul sens, ce qui permet d'éviter une inversion du sens des phases ou du conducteur de protection, tout en contribuant à l'augmentation des lignes de fuite entre conducteurs.

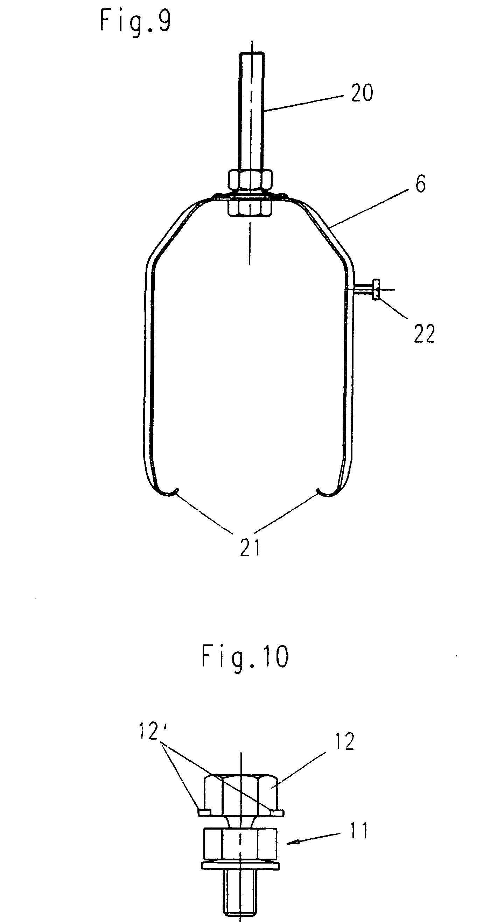

Selon une autre caractéristique de l'invention, les connexions électriques des conducteurs électriques 2 sont assurées chacune par l'intermédiaire d'un ensemble vis-écrou coopérant avec des perçages des extrémités desdits conducteurs et dont la vis de connexion 11 (figure 10) est pourvue d'une tête en deux parties comportant chacune un polygone de manoeuvre et dont la partie 12 distale de la tige filetée, d'une part, est auto-cassante par liaison avec l'autre partie de la tête par une partie cylindrique de section réduite et, d'autre part, est munie de deux ergots 12' formant une butée pour une clé de manoeuvre de type à pipe ou à douille, lors du montage de la vis 11. Ainsi, il est possible de ne serrer la vis 11 que par l'intermédiaire de la partie auto-cassante 12. La rupture se produit lorsque le couple de serrage devient supérieur au couple résistant qui est fonction de la matière de la vis et du diamètre de la partie cylindrique de section réduite reliant la partie auto-cassante 12 au reste de la vis 11. Ce couple de serrage est préétabli pour obtenir une pression de contact optimale entre les extrémités des conducteurs 2.

Le polygone de manoeuvre prévu sur la partie de la tête restant sur la vis 11, sous la partie cylindrique de section réduite, permet un démontage aisé de la vis 11 en cas de besoin.

Les couvre-joints 3 de raccordement des tronçons de gaine 1 isolant les connexions électriques des conducteurs électriques 2 sont constitués, chacun, comme le montre la figure 7 des dessins annexés, par un élément monobloc en forme de boîtier en matière synthétique, dont le corps s'emboîte sur la partie supérieure des extrémités de tronçons de gaine 1 à relier et est pourvu de deux ailes latérales 3' solidaires dudit corps chacune par l'intermédiaire d'une charnière souple, ces ailes étant maintenues, en position de service, contre les ailes correspondantes des tronçons de gaines 1 par l'intermédiaire de languettes de blocage 13 montées sur le corps au moyen de charnières souples et pourvues à leur extrémité libre d'un ergot d'encliquetage 14 destiné à coopérer avec un évidement correspondant 15 des ailes latérales 3'. Ces ailes latérales 3' sont munies, en outre, dans le prolongement des languettes 13, en position de fermeture bloquée du couvre-joint 3, d'une nervure d'inviolabilité 16 s'étendant à très courte distance de l'extrémité correspondante desdites languettes 13.

Ces couvre-joints 3 peuvent être montés sans outil spécifique, leur blocage en position étant réalisé par engagement élastique de l'ergot 14 dans l'évidement 15. Par contre, un démontage manuel des couvre-joints 3 est impossible, conformément à la réglementation en vigueur, la nervure d'inviolabilité 16 empêchant d'accéder à la languette 13 lorsque celle-ci est fermée. Le démontage de la languette 13 ne peut, en effet, être réalisé qu'avec un tournevis engagé sous l'extrémité libre de cette dernière. En outre, le montage et le démontage de tels couvre-joints sont plus rapides et plus sûrs, du fait de la diminution du nombre de pièces à manipuler, que les solutions actuellement existantes mettant en oeuvre plusieurs pièces assemblées par vis-écrous.

Les boîtes 4 d'alimentation (figure 8) en ligne sont constituées, chacune, par un élément monobloc en forme de boîtier analogue à celui formant les couvre-joints 3, dont le corps présente un renflement et est muni sur l'une de ses faces d'un presse-étoupe 17 de passage d'un câble d'alimentation électrique, deux ailes latérales 4' solidaires dudit corps, chacune par l'intermédiaire d'une charnière souple, étant maintenues, en position de service, contre les ailes correspondantes des tronçons de gaines 1 par l'intermédiaire de languettes de blocage analogues à celles des couvre-joints 3.

Dans le cas d'une alimentation en extrémité d'une ligne, les boîtes 4 sans presse-étoupe sont associées avec une pièce complémentaire d'extrémité 18 munie d'un presse-étoupe 19 et présentant une forme générale d'équerre, dont l'un des côtés porte le presse-étoupe 19 et coopère par forme avec l'ouverture correspondante de l'élément monobloc, l'autre côté coopérant avec l'ouverture déterminée entre les ailes latérales 4'.

Les capots 5 de fermeture des extrémités de la ligne d'alimentation électrique sont constitués par une pièce en équerre de forme correspondante à celle de la pièce complémentaire d'extrémité 18 et sont fixés sur les extrémités par l'intermédiaire d'un couvre-joint 3 (figure 1).

Les suspensions 6 pour les tronçons de gaine 1 sont sous forme d'étriers monoblocs élastiquement déformables, montés par leur âme, avec un degré de liberté en rotation, sur une tige de fixation 20, ces étriers présentant une section interne correspondant à celle des tronçons de gaine 1 et l'extrémité de leurs ailes étant munie de crochets 21 ou analogues destinés à s'accrocher élastiquement dans l'extrémité des ailes du U formant lesdits tronçons de gaine 1 (figure 9).

Selon une autre caractéristique de l'invention, au moins une suspension 6 est pourvue d'un moyen d'ancrage 22, sous forme d'une vis de pression, autotaraudeuse ou analogue traversant une aile de l'étrier formant la suspension 6 et s'appuyant sur ou perforant la paroi extérieure de l'aile correspondante du tronçon de gaine 1. Ainsi, un tel moyen d'ancrage 22 permet de bloquer la gaine en un endroit prédéterminé, afin de l'empêcher de se déplacer par reptation, suite à des dilatations successives ou à des vibrations.

Les suspensions 6 permettent de supporter le poids de la ligne d'alimentation dans de bonnes conditions, tout en offrant une résistance d'embrochage faible, ainsi qu'une ouverture sans déformation rémanente suite au serrage en contact des extrémités des deux branches grâce à leur bonne élasticité transversale. Par ailleurs, du fait de leur montage avec un degré de liberté en rotation, elles remplissent une fonction d'auto-alignement lors de l'accrochage élastique de la gaine. Il en résulte que, lors de l'engagement de la gaine, il n'est pas nécessaire de se déplacer au niveau de la suspension 6 pour l'aligner par rapport à la ligne ou pour la fixer.

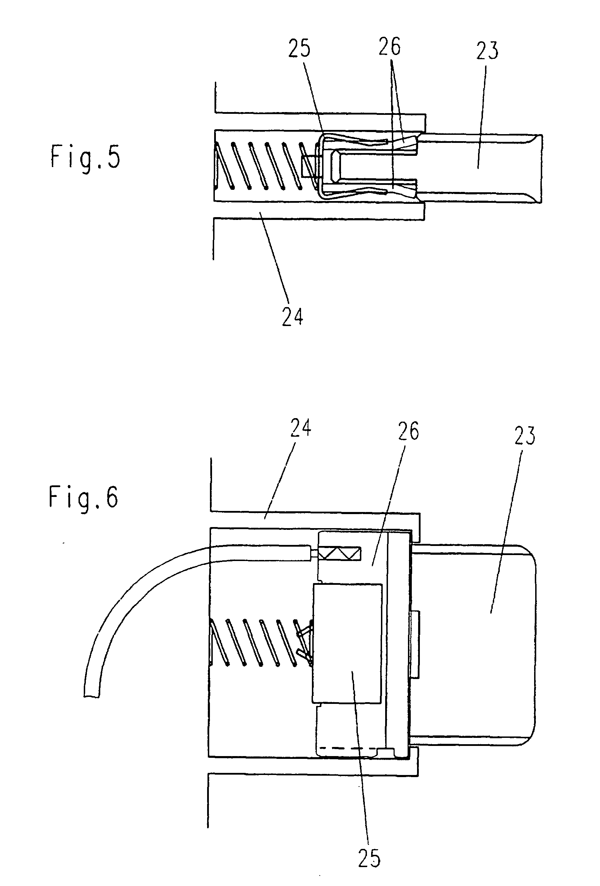

Conformément à une autre caractéristique de l'invention, chaque chariot collecteur 7 (figure 4) est muni de balais 23 retenus dans leur logement 24 (figures 5 et 6) par pincement au moyen d'un dispositif élastique 25 de guidage dans ledit logement 24 et de connexion électrique. Grâce à un tel dispositif 25, il est possible de démonter et monter rapidement les balais 23 pour une maintenance rapide pouvant être effectuée sans avoir à opérer sur le câblage électrique du chariot 7.

Le dispositif 25 est constitué par deux plaquettes 26 de connexion électrique du câble d'alimentation correspondant et par une pince 25 de ressort à lame entourant lesdites plaquettes. Les figures 5 et 6 des dessins annexés représentent un montage de balai 23 dans sa position correspondant à la sortie du chariot collecteur 7 hors de la gaine 1.

Les balais collecteurs de courant 23, qui frottent sur les conducteurs 2 de la gaine 1 s'usent pendant le fonctionnement, et leur remplacement périodique est effectué par retrait desdits balais 23 au moyen d'un outil tel qu'un tournevis. La mise en place d'un balai neuf est réalisée manuellement par simple insertion de son extrémité correspondante dans le dispositif élastique 25. Ces deux opérations sont réalisées sans toucher au câblage électrique du chariot.

Grâce à l'invention, il est possible de réaliser un dispositif d'alimentation électrique par gaine et prise mobile de courant, dans lequel la ligne d'alimentation est allégée tout en présentant une meilleure rigidité.

Par ailleurs, les connexions entre tronçons de gaine 1 sont améliorées et peuvent être effectuées plus rapidement et à moindre frais. Il en est de même en ce qui concerne les moyens de branchement électrique de la ligne d'alimentation ainsi réalisée.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention, tel que défini par les revendications.

## Revendications

1. Dispositif d'alimentation électrique par gaine et prise mobile de courant, essentiellement constitué par des tronçons de gaine (1) en matériau isolant, dans lesquels sont disposés des conducteurs électriques (2) connectés entre-eux au niveau des jonctions des tronçons de gaine (1), par des couvre-joints (3) de raccordement des tronçons de gaine (1) isolant les connexions électriques desdits conducteurs électriques (2), par au moins une boîte (4) d'alimentation en ligne ou en extrémité, par des capots (5) de fermeture des extrémités de la ligne d'alimentation électrique formée par les tronçons de gaine (1), par des suspensions (6) pour les tronçons de gaine (1), et par au moins un chariot collecteur (7) permettant de dériver le courant électrique vers tout récepteur fixe ou mobile, **caractérisé en ce que** chaque tronçon de gaine (1) en matériau isolant est constitué sous forme d'une enveloppe isolante, à section en U renversé, de logement des conducteurs électriques (2) et de guidage du ou des chariots collecteurs (7), cette enveloppe présentant des parois de structure alvéolaire et étant munie, le cas échéant, dans sa partie inférieure d'un joint anti-poussière souple (8), la jonction entre l'âme et les ailes du U formant l'enveloppe étant réalisée par l'intermédiaire de pans inclinés améliorant la rigidité et la stabilité géométrique par rapport à des efforts transversaux ayant tendance à écarter les ailes du U, afin d'empêcher l'accès aux parties sous tension à une main humaine.

2. Dispositif, suivant la revendication 1, **caractérisé en ce que** l'enveloppe formant chaque tronçon de gaine (1) est munie, sur la face interne de son âme et le long du côté intérieur des extrémités libres des ailes du U, de surfaces latérales de guidage du ou des chariots collecteurs (7).

3. Dispositif, suivant la revendication 1, **caractérisé en ce que** les connexions électriques des conducteurs électriques (2) sont assurées chacune par l'intermédiaire d'un ensemble vis-écrou coopérant avec des perçages des extrémités desdits conducteurs et dont la vis de connexion (11) est pourvue d'une tête en deux parties comportant chacune un polygone de manoeuvre et dont la partie (12) distale de la tige filetée, d'une part, est auto-cassante par liaison avec l'autre partie de la tête par une partie cylindrique de section réduite et, d'autre part, est munie de deux ergots (12') formant une butée pour une clé de manoeuvre de type à pipe ou à douille, lors du montage de la vis (11).

4. Dispositif, suivant la revendication 1, **caractérisé en ce que** les couvre-joints (3) de raccordement des tronçons de gaine (1) isolant les connexions électriques des conducteurs électriques (2) sont constitués, chacun par un élément monobloc en forme de boîtier en matière synthétique, dont le corps s'emboîte sur la partie supérieure des extrémités de tronçons de gaine (1) à relier et est pourvu de deux ailes latérales (3') solidaires dudit corps chacune par l'intermédiaire d'une charnière souple, ces ailes étant maintenues, en position de service, contre les ailes correspondantes des tronçons de gaines (1) par l'intermédiaire de languettes de blocage (13) montées sur le corps au moyen de charnières souples et pourvues à leur extrémité libre d'un ergot d'encliquetage (14) destiné à coopérer avec un évidement correspondant (15) des ailes latérales (3').

5. Dispositif, suivant la revendication 4, **caractérisé en ce que** les ailes latérales (3') sont munies, en outre, dans le prolongement des languettes (13), en position de fermeture bloquée du couvre-joint (3), d'une nervure d'inviolabilité (16) s'étendant à très courte distance de l'extrémité correspondante desdites languettes (13).

6. Dispositif, suivant la revendication 1, **caractérisé en ce que** les boîtes (4) d'alimentation en ligne sont constituées, chacune, par un élément monobloc en forme de boîtier analogue à celui formant les couvre-joints (3), dont le corps présente un renflement et est muni sur l'une de ses faces d'un presse-étoupe (17) de passage d'un câble d'alimentation électrique, deux ailes latérales (4') solidaires dudit corps, chacune par l'intermédiaire d'une charnière souple, étant maintenues, en position de service, contre les ailes correspondantes des tronçons de gaines (1) par l'intermédiaire de languettes de blocage analogues à celles des couvre-joints (3).

7. Dispositif, suivant l'une quelconque des revendications 1 et 6, **caractérisé en ce que** les boîtes (4) sans presse-étoupe sont associées à une pièce complémentaire d'extrémité (18) munie d'un presse-étoupe (19) et présentant une forme générale d'équerre, dont l'un des côtés porte le presse-étoupe ( 19) et coopère par forme avec l'ouverture correspondante de l'élément monobloc, l'autre côté coopérant avec l'ouverture déterminée entre les ailes latérales (4').

8. Dispositif, suivant l'une quelconque des revendications 1, 4 et 7, **caractérisé en ce que** les capots (5) de fermeture des extrémités de la ligne d'alimentation électrique sont constitués par une pièce en équerre de forme correspondante à celle de la pièce complémentaire d'extrémité (18) et sont fixés sur les extrémités par l'intermédiaire d'un couvre-joint (3).

9. Dispositif, suivant la revendication 1, **caractérisé en ce que** les suspensions (6) pour les tronçons de gaine (1) sont sous forme d'étriers monoblocs élastiquement déformables, montés par leur âme, avec un degré de liberté en rotation, sur une tige de fixation (20), ces étriers présentant une section interne correspondant à celle des tronçons de gaine (1) et l'extrémité de leurs ailes étant munie de crochets (21) ou analogues destinés à s'accrocher élastiquement dans l'extrémité des ailes du U formant lesdits tronçons de gaine (1).

10. Dispositif, suivant l'une quelconque des revendications 1 et 9, **caractérisé en ce qu'**au moins une suspension (6) est pourvue d'un moyen d'ancrage (22), sous forme d'une vis de pression, autotaraudeuse ou analogue traversant une aile de l'étrier formant la suspension (6) et s'appuyant sur ou perforant la paroi extérieure de l'aile correspondante du tronçon de gaine (1).

11. Dispositif, suivant la revendication 1, **caractérisé en ce que** chaque chariot collecteur (7) est muni de balais (23) retenus dans leur logement (24) par pincement au moyen d'un dispositif élastique (25) de guidage dans ledit logement (24) et de connexion électrique.

12. Dispositif, suivant l'une quelconque des revendications 1 et 12, **caractérisé en ce que** le dispositif élastique (25) de guidage dans le logement (24) et de connexion électrique est constitué par deux plaquettes (26) de connexion électrique du câble d'alimentation correspondant et par une pince (25) de ressort à lame entourant lesdites plaquettes.

## Claims

1. Sleeve and mobile connection for electric supply, essentially comprising lengths of sleeve (1) of insulating material in which are disposed the electrical conductors (2) connected together level with the junctions of the sleeve sections (1), connector covers (3) linking the sleeve sections (1) insulating the electrical connections of the said electrical conductors (2), at least one supply box (4) in line or at the end, caps (5) closing the ends of the electrical supply line which is formed by the sleeve sections (1), suspensions (6) for the sleeve sections (1), and at least one collector slide (7) enabling the electric current to be obtained at any fixed or mobile receptor,
**characterised in that** each sleeve section (1) of insulating material is made in the form of an insulating envelope, with an inverted U cross-section, for housing the electrical conductors (2) and guiding the or each collector slide (7), this envelope having walls of alveolate construction and being provided where necessary in the lower part with a flexible anti-dust joint (8), the junction between the web and the wings of the U which forms the envelope being formed by means of inclined planes which improve the rigidity and geometric stability in relation to the transverse forces which try to widen the wings of the U, in order to prevent access to the parts under voltage through a human hand.

2. A device according to claim 1 **characterised in that** the envelope forming each sleeve section (1) is provided on the internal face of its web and along the inner side of the free ends of the wings of the U with lateral surfaces for guiding the or each collector slides (7).

3. A device according to claim 1 **characterised in that** the electrical connections of the electrical conductors (2) are each secured by means of a fuse plug assembly which interacts with the openings in the ends of the said conductors and of which the connecting screw (11) is provided with a head having two parts each comprising a manipulating polygon and of which the distal part (12) of the threaded rod, on the one hand, is self breaking through its link with the other part of the head through a cylindrical part of reduced section, and on the other hand is provided with two lugs (12') which form a stop for an actuating key of the type having a pipe or bush, during fitting of the screw (11).

4. A device according to claim 1 **characterised in that** the connector covers (3) linking the sleeve sections (1) insulating the electrical connections of the electrical conductors (2) are each comprised of a one-piece element formed as a casing of synthetic material whose body fits on the upper part of the ends of the sleeve sections (1) to be connected and is provided with two lateral wings (3') which are integral with the said body each by means of a flexible hinge, these wings being held in the operating position against the corresponding wings of the sleeve sections (1) by means of locking tongues (13) mounted on the body by means of flexible hinges and provided at their free end with a click lock lug (14) adapted to interact with a corresponding recess (15) in the lateral wings (3').

5. A device according to claim 4 **characterised in that** the lateral wings (3') are provided furthermore in an extension of the tongues (13) in the closed position locked by the connector cover (3), with an impregnable rib (16) which extends to a very short distance from the corresponding end of the said tongues (13).

6. A device according to claim 1 **characterised in that** the in-line supply boxes (4) are each made up of a one-piece element in the form of the box analogous with that forming the connector covers (3), the body of which has a protrusion and is provided on one of its faces with a stuffing box (17) for the passage of an electrical supply cable, two lateral wings (4') integral with the said body, each by means of a flexible hinge being held in the operating position against the corresponding wings of the sleeve sections (1) by means of the locking tongues which are analogous with those of the connector covers (3).

7. A device according to either of claims 1 and 6 **characterised in that** the boxes (4) without stuffing box are connected to a complementary end piece (18) provided with a stuffing box (19) and having a general square shape, of which one of the sides supports the stuffing box (19) and interacts through its shape with the corresponding opening of the one-piece element, the other side interacting with the opening defined between the lateral wings (4').

8. A device according to any of claims 1, 4 and 7, **characterised in that** the caps (5) closing the ends of the electrical supply line are made up of a piece having a square shape corresponding to that of the complementary end piece (18) and are fixed on the ends by means of a connector cover (3).

9. A device according to claim 1 **characterised in that** the suspensions (6) for the sleeve sections (1) are in the form of elastically deformable one-piece stirrup-shaped clamps fitted by their web with a certain degree of rotational play on a fixing rod (20), these clamps having an internal section corresponding to that of the sleeve sections (1) and the end of their wings being provided with hooks (21) or similar members adapted to elastically hook into the ends of the wings of the U shape forming the said sleeve sections (1).

10. A device according to any of claims 1 and 9 **characterised in that** at least one suspension (6) is provided with anchorage means (22), in the form of a compression screw, which is self-tapping or similarly passing through a wing of the clamp forming the suspension (6) and resting on or penetrating through the outer wall of the corresponding wing of the sleeve section (1).

11. A device according to claim 1 **characterised in that** each collector slide (7) is provided with brushes held in their housing (24) clamped by means of an elastic device (25) for guiding in the said housing (24) and electrical connection.

12. A device according to either of claims 1 and 12 **characterised in that** the elastic device (25) for guiding in the housing (24) and electrical connection is comprised of two small plates (26) for electrical connection of the corresponding supply cable and through a plate spring clip (25) surrounding the said small plates.

## Patentansprüche

1. Vorrichtung zur Stromversorgung mit Hilfe eines Aufnahmeteils und eines bewegbaren Stromabnehmerteiles, im wesentlichen bestehend aus Aufnahmeabschnitten (1) aus isolierendem Werkstoff, in denen elektrische Leiter (2) angeordnet sind, die auf Höhe der Verbindungen der Aufnahmeabschnitte (1) miteinander verbunden sind, aus Fugenabdeckungen (3) zur Verbindung der Aufnahmeabschnitte (1), die die elektrischen Verbindungen der elektrischen Leiter (2) isolieren, aus mindestens einem Versorgungsgehäuse (4) längs der Strecke oder am Ende, aus Kappen (5) zum Verschluß der Enden der von den Aufnahmeabschnitten (1) gebildeten Stromversorgungsstrecke, aus Aufhängungen (6) für die Aufnahmeabschnitte (1) und aus mindestens einem Kollektorwagen (7), der die Ableitung des elektrischen Stroms zu jedem beliebigen festen oder beweglichen Empfänger gestattet, **dadurch gekennzeichnet, dass** jeder Aufnahmeabschnitt (1) aus isolierendem Werkstoff in Form einer isolierenden Hülle mit einem Querschnitt in Form eines umgekehrten U zur Aufnahme der elektrischen Leiter (2) und zur Führung des oder der Kollektorwagen (7) ausgebildet ist, wobei diese Hülle Wabenstrukturwände aufweist und ggf. in ihrem unteren Teil mit einer biegsamen Staubschutzdichtung (8) versehen ist, wobei die Verbindung zwischen dem Mittelsteg und den Schenkeln des die Hülle bildenden U über Schrägflächen hergestellt ist, die die Steifigkeit und die geometrische Stabilität gegenüber Querkräften verbessern, die bestrebt sind, die Schenkel des U voneinander zu entfernen, um für eine menschliche Hand den Zugang zu den unter Spannung stehenden Teilen zu verhindern.

2. Vorrichtung nach Anspruch 1, **dadurch gekennzeichnet, dass** die jeden Aufnahmeabschnitt (1) bildende Hülle auf der Innenseite ihres Mittelstegs und längs der Innenseite der freien Enden der Schenkel des U mit Seitenflächen zur Führung des oder der Kollektorwagen (7) versehen ist.

3. Vorrichtung nach Anspruch 1, **dadurch gekennzeichnet, dass** die elektrischen Verbindungen der elektrischen Leiter (2) jeweils über eine Schrauben-Mutter-Anordnung gewährleistet werden, die mit Bohrungen an den Enden der Leiter zusammenwirkt, wobei deren Verbindungsschraube (11) mit einem Kopf aus zwei Teilen versehen ist, die jeweils ein Betätigungsvieleck aufweisen, wobei der distale Teil (12) des Gewindestiftes einerseits durch Verbindung mit dem anderen Teil des Kopfs über einen zylindrischen Teil mit reduziertem Querschnitt selbstbrechend ist und andererseits zwei Nasen (12') aufweist, die einen Anschlag für einen Betätigungsschlüssel nach Art eines Steck- oder Kopfschlüssel bei der Montage der Schraube (11) bilden.

4. Vorrichtung nach Anspruch 1, **dadurch gekennzeichnet, dass** die Fugenabdeckungen (3) zur Verbindung der Aufnahmeabschnitte (1), die die elektrischen Verbindungen der elektrischen Leiter (2) isolieren, jeweils aus einem einstückigen Element in Form eines Gehäuses aus Kunststoff bestehen, dessen Basiskörper auf den oberen Teil der Enden von zu verbindenden Aufnahmeabschnitten (1) aufgesteckt ist und mit zwei Seitenschenkeln (3') versehen ist, die mit dem Basisteil jeweils über ein biegsames Scharnier verbunden sind, wobei diese Schenkel in Betriebsstellung an die entsprechenden Schenkel der Aufnahmeabschnitte (1) über Blokkierzungen (13) angelegt gehalten sind, die an dem Basisteil mit Hilfe von biegsamen Scharnieren montiert sind und an ihren freien Ende mit einer Einklinknase (14) versehen sind, die dazu bestimmt ist, mit einer entsprechenden Aussparung (15) der Seitenschenkel (3') zusammenzuwirken.

5. Vorrichtung nach Anspruch 4, **dadurch gekennzeichnet, dass** die Seitenschenkel (3') außerdem in der Verlängerung der Zungen (13) in der blockierten Schließstellung der Fugenabdeckung (3) mit einer Unversehrtheitsrippe (16) versehen sind, die sich in einer sehr kurzen Entfernung von dem entsprechenden Ende der Zungen (13) erstreckt.

6. Vorrichtung nach Anspruch 1, **dadurch gekennzeichnet, dass** die Versorgungsgehäuse (4) längs der Strecke jeweils aus einem einstückigen Element in Form eines Gehäuses bestehen, das zu dem die Fugenabdeckungen (3) bildenden Gehäuse analog ist und dessen Basisteil eine Verdickung aufweist und auf einer seiner Seiten mit einer Stopfbuchse (17) zur Durchführung eines elektrischen Versorgunskabels versehen ist, wobei zwei Seitenschenkel (4), die mit dem Basisteil jeweils über ein biegsames Scharnier fest verbunden sind, in der Betriebsstellung an die entsprechenden Wangen der Aufnahmeabschnitte (1) über Blockierzungen angelegt gehalten werden, die zu denen der Fugenabdeckungen (3) analog sind.

7. Vorrichtung nach einem der Ansprüche 1 und 6, **dadurch gekennzeichnet, dass** die Gehäuse (4) ohne Stopfbuchse einem Ergänzungsendteil (18) zugeordnet sind, das mit einer Stopfbuchse (19) versehen ist und die allgemeine Form eines Winkels aufweist, von dem eine Seite die Stopfbuchse (19) trägt und formmäßig mit der entsprechenden Öffnung des einstückigen Elements zusammenwirkt, wobei die andere Seite mit der zwischen den Seitenschenkeln (4') begrenzten Öffnung zusammenwirkt.

8. Vorrichtung nach einem der Ansprüche 1, 4 und 7, **dadurch gekennzeichnet, dass** die Kappen (5) zum Verschluß der Enden der Stromversorgungsstrecke aus einem winkelförmigen Teil mit einer der Form des Ergänzungsendteils (18) entsprechenden Form bestehen und an den Enden über eine Fugenabdeckung (3) befestigt sind.

9. Vorrichtung nach Anspruch 1, **dadurch gekennzeichnet, dass** die Aufhängungen (6) für die Aufnahmeabschnitte (1) in Form von einstückigen, elastisch verformbaren Bügeln vorliegen, die über ihren Mittelsteg mit einem Freiheitsgrad in Drehrichtung an einer Befestigungsstange (20) montiert sind, wobei die Bügel einen inneren Querschnitt aufweisen, der dem der Aufnahmeabschnitte (1) entspricht, und das Ende ihrer Schenkel mit Haken (21) oder dergleichen versehen ist, die dazu bestimmt sind, sich in das Ende der Schenkel des die Aufnahmeabschnitte (1) bildenden U elastisch einzuhaken.

10. Vorrichtung nach einem der Ansprüche 1 und 9, **dadurch gekennzeichnet, dass** mindestens eine Aufhängung (6) mit einem Verankerungsmittel (22) in Form einer selbstschneidenden Druckschraube oder dergleichen versehen ist, das einen Schenkel des die Aufhängung (6) bildenden Bügels durchquert und an der Außenwand des entsprechenden Schenkels des Aufnahmeabschnitts (1) anliegt oder diese durchbohrt.

11. Vorrichtung nach Anspruch 1, **dadurch gekennzeichnet, dass** jeder Kollektorwagen (7) mit Bürsten (23) versehen ist, die in ihrer Halterung (24) durch Festklemmen mit Hilfe einer elastischen Vorrichtung (25) zur Führung in diese Halterung(24) und zum elektrischen Anschluß gehalten sind.

12. Vorrichtung nach einem der Ansprüche 1 und 12, **dadurch gekennzeichnet, dass** die elastische Vorrichtung (25) zur Führung in die Halterung (24) und zum elektrischen Anschluß aus zwei Plättchen (26) zum elektrischen Anschluß des entsprechenden Versorgungskabels und aus einer diese Plättchen umgebenden Blattfederklemme (25) besteht.
